# EUROPÄISCHE PATENTSCHRIFT

(11) **EP 0 798 840 B1**
(45) Veröffentlichungstag und Bekanntmachung des Hinweises auf die Patenterteilung: **30.01.2002**
(21) Anmeldenummer: 97104065.4
(22) Anmeldetag: 11.03.1997
(51) Int. Cl.: H02J 7/10, H04B 1/40, H04B 1/56

(54) **Batterie-Stromversorgung**
Battery power supply
Dispositif de batterie comme source d'alimentation

(30) Priorität: 27.03.1996 DE 29605699 U; 27.03.1996 DE 19612205
(43) Veröffentlichungstag der Anmeldung: 01.10.1997
(73) Patentinhaber: SIEMENS AKTIENGESELLSCHAFT, 80333 München (DE)
(72) Erfinder: Hofmann, Ludwig, 85304 Ilmmünster (DE)

(56) Entgegenhaltungen:
- EP-A- 0 561 257
- EP-A- 0 613 257
- EP-A- 0 674 400
- US-A- 5 423 078
- PATENT ABSTRACTS OF JAPAN vol. 017, no. 148 (E-1338), 24.März 1993 & JP 04 315320 A (SONY CORP), 6.November 1992,
- PATENT ABSTRACTS OF JAPAN vol. 018, no. 137 (E-1518), 7.März 1994 & JP 05 316646 A (FUJITSU LTD), 26.November 1993,
- PATENT ABSTRACTS OF JAPAN vol. 010, no. 340 (E-455), 18.November 1986 & JP 61 144131 A (TOSHIBA CORP), 1.Juli 1986,

## Beschreibung

Die Erfindung bezieht sich auf eine Batterie-Stromversorgung gemäß dem Oberbegriff des Patentanspruchs 1.

Eine solche Stromversorgung ist in der EP-A-0 613 257 beschrieben. In dieser Schaltung wird ein Kondensator über einen Hochsetzsteller aufgeladen. Von der Spannung des Kondensators wird über eine Glättungsschaltung eine Last impulsweise mit Strom versorgt.

Aus der EP-A-0 561 257 ist eine Schaltungsanordnung zur Überbrückung von kurzzeitigen Spannungsabfällen in batteriegespeisten Funkgeräten beschrieben. Hierbei wird zeitweise zur Batteriespannung die Spannung eines aufgeladenen Kondensators addiert. Bei TDMA-(Time Division Multiple Access) Funksystemen sind die Funkgeräte nur für relativ kurze Zeit im Sendebetrieb, in dem sie einen sogenannten Sendeburst aussenden. Der pulsförmige Sendebetrieb bewirkt eine relativ hohe Stromaufnahme während des Sendeburst. Dies führt zu einer Verringerung der Lebensdauer der Batterie, so daß nur besonders geeignete Batterien für diese Funkgeräte verwendbar sind. Weiter ist die Strom- bzw. Spannungsversorgung für den höchsten vorkommenden Strom auszulegen, wobei Leitungs- und Schaltwiderstände ebenso wie die Innenwiderstände der Batterie sehr kritisch sind. Schließlich beeinflussen die pulsförmigen Versorgungsströme während des Sendebetriebes auch umliegende Schaltungsteile, wie z.B. den NF-Verstärker und die Steuerung des Funkgerätes. Problematisch ist ferner, daß die Endstufen der Sendeeinrichtung des Funkgerätes nicht über den gesamten Betrieb der Versorgungsspannung mit ihrem optimalen Wirkungsgrad arbeiten, und meist an der unteren Grenze der Batteriespannung an ihrer Leistungsgrenze sind.

Aus der europäischen Patentanmeldung 0 674 400 A1 ist eine Batterie-Stromversorgung für ein Funkgerät bekannt, wobei im Stromzuführungsweg eine Konstantstromquelle, sowie ein parallel zur Endstufe geschalteter Pufferkondensator angeordnet sind. Der Pufferkondensator wird mit einem Konstantstrom bis auf einen bestimmten Spannungswert aufgeladen. Während des Sendeburst im Sendebetrieb wird dieser Kondensator entladen und stellt den benötigten Strom für die Endstufen der Sendestufe zur Verfügung.

Der Spannungsabfall während des Sendebursts muß sehr niedrig sein, in der Regel darf er sich nur im Bereich einiger hundert Millivolt bewegen. Es müssen daher für den Pufferkondensator sehr große Kapazitäten verwendet werden.

Der Erfindung liegt die Aufgabe zugrunde, eine Batterie-Stromversorgung anzugeben, bei der der Kapazitätsbedarf für den Pufferkondensator reduziert ist.

Diese Aufgabe wird erfindungsgemäß durch die im Schutzanspruch 1 angegebenen Merkmale gelöst.

Durch die Kombination aus einem Hoch- und einem Tiefsetzsteller in der Batterie-Stromversorgung kann der Pufferkondensator in seiner Kapazität drastisch verkleinert werden. Damit ist auch der Platzbedarf für die Stromversorgung verringert.

Bei der Ausgestaltung der Erfindung durch die gemeinsame Spule für Hoch- und Tiefsetzsteller kann der Platzbedarf weiter verringert werden.

Im folgenden wird die Erfindung anhand eines in der Zeichnung dargestellten Ausführungsbeispieles beschrieben. Dabei zeigen:
- Figur 1: das Blockschaltbild einer Schaltung zur Pufferung der Sendestufe und
- Figur 2: ein Detailschaltbild dieser Schaltung.

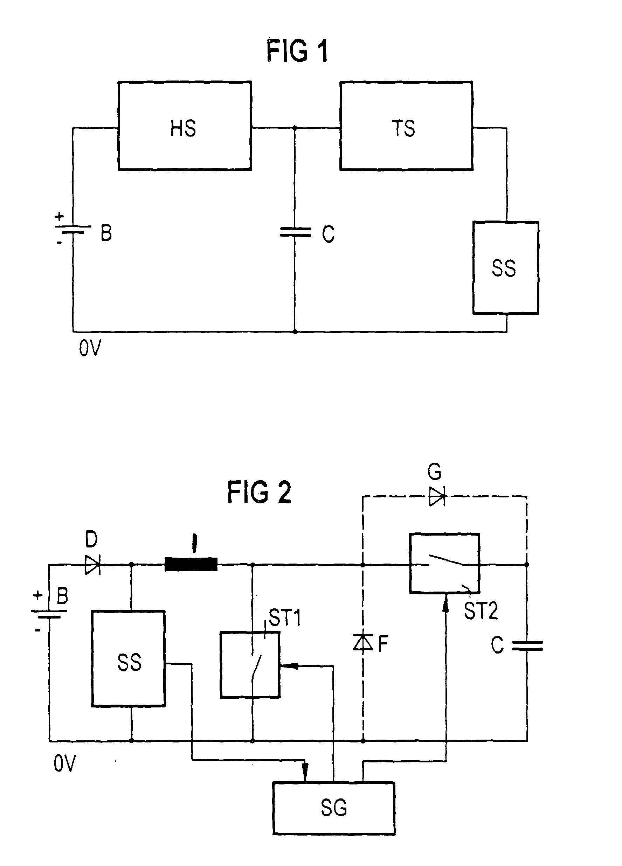

In Figur 1 ist eine Batterie B dargestellt, die in der Regel eine Ausgangsspannung im Bereich von 3,6 V bis 5 V abgibt. Der negative Pol der Batterie B ist beispielsweise mit einem Bezugspotential OV verbunden. Die Ausgangsspannung der Batterie B an ihrem Pluspol wird in einem Hochsetzsteller HS auf eine Spannung von beispielsweise 30 V hochtransformiert, und damit ein Kondensator C aufgeladen. Der Hochsetzsteller HS kann ausgangsseitig strombegrenzt sein, so daß der von der Batterie B gelieferte Strom nur wenig pulsiert. Hierdurch wird die Batterie B nur wenig belastet.

Während des Sendebetriebes einer Sendestufe SS wird die am Kondensator C anliegende Spannung über einen Tiefsetzsteller TS auf die Versorgungsspannung der Sendespannung SS heruntertransformiert. Die Spannung am Kondensator C sinkt dabei auf beispielsweise 10 V ab.

Das Grundprinzip der Erfindung besteht darin, die Spannung am Kondensator C, der als Pufferkondensator wirkt, gegenüber der Ausgangsspannung der Batterie B heraufzusetzen, und anschließend die Spannung am Kondensator C auf die benötigte Versorgungsspannug der Sendestufe SS herabzusetzen.

Hierdurch kann die Kapazität des Kondensators C und damit auch dessen Baugröße verkleinert werden. Zudem ist bei dieser Stromversorgung der Sendestufe SS eines nicht näher dargestellte TDMA-Funkgerätes die Versorgungsspannung der Sendestufe SS weitgehend unabhängig wählbar von der Ausgangsspannung der Batterie B.

Bei den Schaltreglern HS und TS ist jeweils die Spule das platzbestimmende, und nicht integrierbare Bauelement. Bei der in Figur 2 dargestellten Schaltung wurden der Hoch- und der Tiefsetzsteller HS, TS derart kombiniert, so daß für beide Schaltregler HS, TS eine einzige Spule I verwendet werden kann.

Die Batterie B ist wiederum mit ihrem negativen Pol am Bezugspotential OV angeschaltet. Der positive Pol der Batterie B ist mit der Anode einer Diode D verbunden. Zwischen die Kathode der Diode D und das Bezugspotential OV ist die Sendestufe SS geschaltet.

Die Kathode der Diode D ist weiter mit dem einen Anschluß der Spule I verbunden. Der andere Anschluß der Spule I ist über ein Schaltelement ST1 mit dem Bezugspotential OV verbunden. Der andere Anschluß der Spule I ist weiter über ein Schaltelement ST2 mit einem Anschluß des Kondensators C verbunden, dessen anderer Anschluß am Bezugspotential OV angeschaltet ist.

Dem Schaltelement ST1 kann eine Freilaufdiode F parallelgeschaltet sein, deren Anode mit dem Bezugspotential OV verbunden ist. Dem Schaltelemente ST2 kann eine Gleichrichterdiode G parallel geschaltet sein, deren Kathode am Kondensator C angeschaltet ist.

Zur Steuerung der Schaltelemente ST1 und ST2 ist eine Steuerschaltung SG vorgesehen. Die Steuerschaltung SG ist auch beispielsweise mit der Sendestufe SS verbunden, und erhält hierüber die Einschalt- und Ausschaltzeitpunkte für die Sendebursts im Sendebetrieb der Sendestufe SS.

Der in Figur 1 dargestellte Hochsetzsteller HS wird in Figur 2 durch die Spule I, das Schaltelement ST1 und die Gleichrichterdiode G realisiert. Durch diesen Hochsetzsteller HS wird die von der Batterie B über die Diode D abgegebene Ausgangsspannung hochtransformiert und an den Kondensator C gegeben. Während dieser Betriebsphase ist beispielsweise das Schaltelement ST2 in einem offenen Schaltzustand.

Der in Figur 1 dargestellte Tiefsetzsteller TS ist in Figur 2 ebenfalls durch die Spule I, durch die Freilaufdiode F und das Schaltelement ST2 realisiert. Die am Kondensator C abgreifbare Spannung wird während des Sendebetriebes der Sendestufe SS von diesem Tiefsetzsteller TS auf die Versorgungsspannung heruntertransformiert. Während dieser Betriebsphase ist das Schaltelemente ST1 beispielsweise in einem offenen Schaltzustand. Die Versorgungsspannung an der Sendestufe SS ist bei dieser Kombination aus Hoch- und Tiefsetzsteller HS, TS vorzugsweise in etwa gleich oder größer als die Batteriespannung.

Bei einer bevorzugten Ausführungsform der Schaltung gemäß Figur 2 sind die Schaltelemente durch bidirektionale Schalttransistoren realisiert. Hierzu können MOS-FET-Bauelemente verwendet werden.

Bei dieser Ausführungsform kann auf die Freilaufdiode F und die Gleichrichterdiode G verzichtet werden. Deren Funktionen werden durch die entsprechende Steuerung der Schaltelemente ST1 bzw. ST2 realisiert.

Während des Aufladevorganges des Kondensators C durch den Hochsetzsteller HS wird das Schaltelemente ST1 periodisch ein- und ausgeschaltet. Gleichzeitig wird mit der gleichen Periode auch das Schaltelement ST2 ein- bzw. ausgeschaltet, wobei die Schaltzustände der beiden Schaltelemente ST1 und ST2 jeweils gegenphasig sind. Hierdurch ist sichergestellt, daß beim leitenden Schaltzustand des Schaltelementes ST1 das Schaltelement ST2 sich in einem offenen Schaltzustand befindet, und somit kein Strom vom Kondensator C abfließen kann. Beim offenen Schaltzustand des Schaltelementes ST1 ist das Schaltelement ST2 in einem leitenden Schaltzustand, und der Strom fließt durch die Spule I zum Kondensator C.

Analog hierzu wird während des Sendebetriebes der Sendestufe SS das Schaltelement ST2 des Tiefsetzstellers TS periodisch ein- und ausgeschaltet. Mit der gleichen Periode, aber gegenphasig, wird auch das Schaltelement ST1 angesteuert. Bei einem leitenden Schaltzustand des Schaltelementes ST2 ist das Schaltelement ST1 in einem offenen Schaltzustand, und der Strom fließt vom Kondensator C durch die Spule I zur Sendestufe SS . Wenn sich das Schaltelement ST2 in einem offenen Schaltzustand befindet, dann ist das Schaltelement ST1 in einem leitenden Schaltzustand. Durch diese Kombination der Schaltzustände der Schaltelemente ST1 und ST2 kann die Wirkung der Freilaufdiode F bei der Funktion als Tiefsetzsteller TS realisiert werden.

An Stelle der Sendeendstufe SS können mit der erfindungsgemäßen Batterie-Stromversorgung auch Anzeigeelemente, wie beispielsweise Leuchtdioden oder Ähnliches, im Funkgerät oder allgemein in einem batteriegespeisten Endgerät angesteuert werden. Durch die Erfindung kann beispielsweise die Lichtausbeute der Leuchtdioden in Folge der höheren Bertriebsspannung verbessert werden. Bei batteriebetriebenen Motoren beispielsweise kann aus dem gleichen Grund das Anlaufverhalten verbessert werden.

## Patentansprüche

1. Batterie-Stromversorgung für eine Last (SS) mit periodischem, impulsartigem Strombedarf, insbesondere für ein TDMA-Funkgerät,
mit einem Hochsetzsteller (HS), der zwischen die Batterie (B) und eine Kapazität (C) geschaltet ist, wobei die Last (SS) indirekt an der Kapazität (C) angeschaltet ist,
**gekennzeichnet t durch** ,
einen zwischen die Kapazität (C) und die Last (SS) geschalteten Tiefsetzsteller (TS), wobei die Ausgangsspannung des Hochsetzstellers (HS) deutlich über der des Tiefsetzstellers (TS) liegt.

2. Batterie-Stromversorgung nach Anspruch 1,
**gekennzeichnet durch** eine gemeinsame Induktivität (I) für den Hochsetzsteller (HS), mit einem ersten Schaltelement (ST1) und einer Gleichrichterdiode (G), und für den Tiefsetzsteller (TS) mit einem zweiten Schaltelement (ST2) und einer Freilaufdiode (F), wobei an einem Anschluß der Induktivität (I) die Batterie (B) und die Last (SS) angeschaltet sind, und der andere Anschluß einerseits über eine Parallelschaltung aus dem ersten Schaltelement (ST1) und der Freilaufdiode (F) mit einem Bezugspotential (OV) und andrerseits über eine Parallelschaltung aus dem zweiten Schaltelement (ST2) und der Gleichrichterdiode (G) mit der Kapazität (C) verbunden ist.

3. Batterie-Stromversorgung nach Anspruch 2,
**gekennzeichnet durch** bidirektionale, gegenphasig angesteuerte Schaltelemente (ST1, ST2) in dem Hoch- und dem Tiefsetzsteller (HS, TS), wodurch das zweite Schaltelement (ST2) die Gleichrichterdiode (G) für den Hochsetzsteller (HS), und das erste Schaltelement (ST1) die Freilaufdiode (F) für den Tiefsetzsteller (TS) ersetzt.

## Claims

1. Battery power supply for a load (SS) having a periodic, pulsed current consumption, in particular for a TDMA radio,
having a step-up controller (HS), which is connected between the battery (B) and a capacitance (C), with the load (SS) being connected indirectly to the capacitance (C),
**characterized by**
a step-down controller (TS) which is connected between the capacitance (C) and the load (SS), with the output voltage of the step-up controller (HS) being considerably greater than that of the step-down controller (TS).

2. Battery power supply according to Claim 1,
**characterized by** a common inductance (I) for the step-up controller (HS), having a first switching element (ST1) and a rectifier diode (G), and for the step-down controller (TS) having a second switching element (ST2) and a freewheeling diode (F), with the battery (B) and the load (SS) being connected to one connection of the inductance (I), and the other connection being connected firstly via a parallel circuit comprising the first switching element (ST1) and the freewheeling diode (F) to a reference earth potential (0V), and being connected secondly via a parallel circuit comprising the second switching element (ST2) and the rectifier diode (G) to the capacitance (C).

3. Battery power supply according to Claim 2,
**characterized by** bi-directional switching elements (ST1, ST2), which are actuated in antiphase, in the step-up controller and step-down controller (HS, TS), by which means the second switching element (ST2) replaces the rectifier diode (G) for the step-up controller (HS), and the first switching element (ST1) replaces the freewheeling diode (F) for the step-down controller (TS).

## Revendications

1. Alimentation par batterie pour une charge (SS) présentant une consommation de courant périodique impulsionnelle, notamment pour un appareil radio TDMA, comprenant un dispositif élévateur de tension (HS) monté entre la batterie (B) et un condensateur ( C ), la charge (SS) étant connectée indirectement au condensateur ( C ), **caractérisée par** un dispositif réducteur de tension (TS) monté entre le condensateur ( C ) et la charge (SS), la tension de sortie du dispositif élévateur de tension (HS) étant nettement supérieure à celle du dispositif réducteur de tension (TS).

2. Alimentation par batterie selon la revendication 1, **caractérisée par** une inductance (I) commune pour le dispositif élévateur de tension (HS) comprenant un premier élément de circuit (ST1) et une diode de redressement (G) et pour le dispositif réducteur de tension (TS) comprenant un second élément de circuit (ST2) et une diode arbitraire (F), la batterie (B) et la charge (SS) étant connectées à une borne de l'inductance (I) et la seconde borne étant reliée d'une part à un potentiel de référence (0V) par le biais d'un montage parallèle formé du premier élément de circuit (ST1) et de la diode arbitraire (F) et d'autre part au condensateur (C ) par le biais d'un montage parallèle formé du second élément de circuit (ST2) et de la diode de redressement (G).

3. Alimentation par batterie selon la revendication 2, **caractérisée par** des éléments de circuit (ST1, ST2) bidirectionnels, dans les dispositifs élévateurs et réducteurs de tension (HS, TS) excités en opposition de phase, grâce à quoi le second élément de circuit (ST2) remplace la diode de redressement (G) pour le dispositif élévateur de tension (HS) et le premier élément de circuit (ST1) remplace la diode arbitraire (F) pour le dispositif réducteur de tension (TS).
